# FASCICULE DE BREVET EUROPEEN

(11) **EP 0 688 251 B1**
(45) Date de publication et mention de la délivrance du brevet: **25.03.1998**
(21) Numéro de dépôt: 92919433.0
(22) Date de dépôt: 04.09.1992
(51) Int. Cl.: B08B 3/02, B08B 3/12

(54) **DISPOSITIF DE COLLECTE D'IMPURETES ET PROCEDE DE MESURE DE LA PROPRETE D'UNE SURFACE**
VORRICHTUNG ZUR AUFNAHME VON SCHMUTZ UND VERFAHREN ZUM MESSEN DER OBERFLÄCHENREINHEIT
DEVICE FOR PICKING UP DIRT AND METHOD FOR MEASURING SURFACE CLEANLINESS

(30) Priorité: 06.09.1991 FR 9111045
(43) Date de publication de la demande: 27.12.1995
(73) Titulaire: COMMISSARIAT A L'ENERGIE ATOMIQUE, 75015 Paris (FR); INSTITUT NATIONAL DE LA RECHERCHE AGRONOMIQUE, F-75341 Paris Cédex 07 (FR); CHARAMATHIEU, André, 92260 Fontenay-aux-Roses (FR)
(72) Inventeur: CHARAMATHIEU, André, F-92260 Fontenay-aux-Roses (FR); CERF, Olivier, F-75005 Paris (FR); MARCHAL, Paul 1, résidence du Parc du Château de, F-91190 Gif-sur-Yvette (FR); SABOUDI, Abdel-Krim, F-92260 Fontenay-aux-Roses (FR)
(74) Mandataire: Ilgart, Jean-Christophe
(86) Numéro de dépôt international: FR9200844
(87) Numéro de publication internationale: WO9304788

(56) Documents cités:
- WO-A-89/04729
- DE-A- 2 548 432
- FR-A- 2 549 745
- US-A- 4 890 567
- US-A- 4 893 320

## Description

L'invention concerne un dispositif et un procédé de collecte d'impuretés ou de salissures d'une surface, notamment pour mesurer la propreté ou l'encrassement de celle-ci d'après le nombre ou la concentration des impuretés.

Les techniques connues consistent d'une manière générale à frotter la surface par une brosse, un chiffon, un coton ou un outil analogue pour arracher les impuretés présentes. L'outil peut être sec, humide ou installé dans une coupe remplie d'un liquide solvant et dont le bord d'ouverture est plaqué contre la surface.

L'outil travaille dans un liquide ou est ensuite plongé dans un liquide qui se charge des impuretés. La mesure de la propreté est effectuée par des appareils connus dont le choix dépend des impuretés. Il est ainsi possible de compter les particules une fois qu'elles sont mises en suspension ou de mesurer l'absorbance de la solution si le liquide est un solvant propre dans lequel les impuretés se dissolvent ou se remettent en suspension ou d'utiliser tout autre moyen permettant de remonter aux valeurs recherchées.

Le dispositif antérieur le plus proche de l'invention à la connaissance des inventeurs comporte une coupe occupée par une brosse tournante et des moyens de remplir la coupe d'un liquide approprié à la conservation des bactéries et d'aspirer ensuite ce liquide. La brosse frotte sur la surface. Le prélèvement consiste à remplir la coupe, à mettre la brosse en marche et à retirer le liquide quand on estime que toutes les bactéries ont été détachées de la surface.

Ces diverses façons de procéder présentent cependant l'inconvénient que les outils ne sont pas toujours efficaces pour enlever toutes les catégories d'impuretés et qu'ils peuvent eux-mêmes être encrassés au départ, ce qui compromet la qualité des mesures.

De plus, le contact d'objets solides peut arracher des fragments de l'outil ou de la surface, avec le même effet. Il est encore difficile d'évaluer avec précision la superficie frottée par l'outil et d'atteindre les salissures incrustées dans les crevasses microscopiques d'une surface même lisse en apparence, ainsi que celles qui adhérent à des recoins ou à des parties difficilement accessibles de surfaces irrégulières, quoique ces parties soient souvent les plus encrassées.

Pour le dispositif décrit en détail ci-dessus, on peut remarquer qu'il n'est adapté qu'au prélèvement de bactéries. La brosse risque d'ailleurs de retenir une partie des salissures qu'elle arrache. Il est impossible d'évaluer cette partie et d'en tenir compte pour corriger les résultats des mesures.

Enfin, les procédés où le nettoyage des surfaces est effectué par l'éclatement de bulles de cavitation suscitées par des générateurs d'ultrasons permettent probablement de décoller et d'arracher une bonne partie des impuretés, mais il n'est pas possible d'affirmer que les résultats sont parfaits ou reproductibles car les bulles apparaissent de façon aléatoire. De plus, les impuretés sont modifiées car la violence des chocs des bulles les fragmente souvent, ou les tue si elles sont des organismes vivants. De tels procédés sont donc inapplicables si des mesures de salissure doivent suivre.

L'objet de l'invention est de s'affranchir de ces inconvénients. Le dispositif de collecte d'impuretés comprend sous sa forme la plus générale, outre une coupe à bord plaqué contre la surface et qui délimite un volume étanche avec elle, un circuit de fluide de collecte englobant la coupe et des moyens de confinement du circuit, de décollement des impuretés de la surface par le fluide et d'entraînement des impuretés par le fluide. Il est caractérisé par rapport au brevet FR-A-2 549 745 en ce que le circuit comprend une branche sur laquelle un récipient amovible de fluide ou un instrument de mesure de propreté est installé, les moyens de décollement étant agencés pour créer un champ de force astationnaire dans la coupe et sur toute la portion de surface englobée par le bord de la coupe. Le fluide est choisi aussi propre que possible, ce qui signifie qu'il ne comporte pas ou pratiquement d'impuretés susceptibles d'être confondues avec les impuretés prélevées à la surface au moment de la mesure. Il est utilisé pour recueillir les impuretés de la surface sans aucun intermédiaire tel qu'un outil solide ou un autre moyen créant un contact sur la surface. Ses propriétés de décollement sont conférées soit par sa nature propre s'il est un solvant des impuretés, ce qui est le cas des détergents pour les graisses, soit par des ultrasons ou des vibrations mécaniques dont il est parcouru et qui proviennent de générateurs fixés à la coupe ou à une pièce connexe. En variante, on peut placer les générateurs d'ultrasons sur une partie de la surface hors de la coupe mais proche d'elle et le fluide ne participe alors au décollement que s'il est un solvant. On a toute liberté pour choisir les générateurs et les combiner ainsi que pour choisir leurs emplacements et leurs fréquences et obtenir ainsi un décollement plus efficace. On peut encore utiliser des générateurs de vibrations mécaniques de fréquence plus basse.

Les moyens d'entraînement des impuretés sont utilisés pour créer des courants ou de l'agitation dans le fluide pouvant ainsi participer également au décollement des impuretés. Celles-ci sont entraînées et se dispersent dans la coupe puis dans le reste du circuit confiné. Ces moyens peuvent consister en un piston coulissant dans la coupe et la partageant en deux chambres. Si le dispositif est conçu de sorte que les chambres communiquent entre elles par une partie en boucle du circuit ou que la chambre donnant sur la surface communique avec un autre volume du dispositif, le mouvement du piston provoque l'agitation souhaitée.

Le piston coulissant peut aussi être employé autrement. Les inventeurs ont en effet constaté qu'une utilisation routinière de générateurs de vibration en combinaison à un courant de liquide ne suffisait pas toujours à collecter les impuretés même si les vibrations les avaient décollées : il arrivait souvent que certaines impuretés étaient retenu es dans des régions du liquide situées aux noeuds du champ de vibrations produit, c'est-à-dire dans les zones de calme, et que le courant n'exerçait pas une force suffisante pour les en faire sortir, surtout pour les impuretés les plus petites.

Les inventeurs préconisent donc d'utiliser un champ d'ondes astationnaire pour collecter plus sûrement les impuretés, même s'il n'est pas nécessaire dans tous les cas. Un champ a stationnaire est produit si la forme, de la coupe est modifiée, ce que le déplacement du piston réalise et qui doit être distingué des effets dynamiques d'agitation du fluide produit si les déplacements sont rapides : le champ est astationnaire même si le piston est mû dans des conditions presque statiques. On peut aussi envisager de moduler les fréquences des générateurs de vibrations, ou de les répartir en groupes successivement mis en service, pour créer des champs astationnaires.

Un autre moyen d'entraînement et de décollement consiste en un moyen de soufflage de gaz dans une coupe remplie de liquide, qu'on fait ainsi bouillonner.

Le fluide peut ensuite passer par un filtre où les impuretés sont retenues, ou bien la mesure est effectuée sur le fluide quand une suspension homogène des impuretés (particules ou bactéries) a été réalisée.

Dans un autre type de conception, le fluide ne remplit pas nécessairement la coupe et le moyen de décollement comprend une partie du circuit confiné modelée en buses débouchant dans la coupe et projetant le fluide vers la surface. Le fluide est ensuite aspiré hors de la coupe. Si les buses sont disposées sur un corps creux tournant dans la coupe, il est avantageux que les buses soient réparties de façon à asperger des portions de la surface qui s'étendent sur des portions de plusieurs rayons de la surface enclose par la coupe, de telle sorte que ces portions aient une extension radiale totale d'un rayon entier de la surface. Le soufflage ou la projection de fluide sur la surface contribue aussi au décollement des impuretés.

On préconise alors, dans des cas semblables où le moyen de décollement n'est pas composé de générateurs de vibrations, de créer dans la coupe un champ de forces astationnaire conformément aux remarques précédentes. Un tel champ est réalisé par exemple si la pression de soufflage ou de projection est variable et subit des à-coups, ou si le réseau de buses de projection est mobile : il peut alors prendre la forme d'un tourniquet suspendu au sommet de la coupe et que la pression du fluide projeté fait automatiquement tourner. Des réalisations concrètes seront décrites. Ou encore, on peut envisager des réseaux distincts de buses de projection mises successivement en activité.

On peut procéder à des mesures sur place : un appareil de mesure est alors incorporé au dispositif et peut être installé par exemple sur une boucle du circuit confiné ou devant la coupe, notamment si la mesure est une mesure d'absorbance ou, de manière plus générale, de concentration des produits extraits et présents dans le volume confiné. La coupe est alors au moins partiellement en matière transparente. Sinon, le circuit peut être muni d'un dispositif de mesure associé dans lequel le liquide est mis en circulation, continue ou alternée, ou de récipients amovibles dans lesquels le fluide chargé d' impuretés est recueilli. Le récipient est ensuite démonté pour être amené vers un appareil de mesure distinct du dispositif. Le temps nécessaire à la mesure et le nombre de cycles peuvent être très différents suivant le cas. L'appareil peut cependant être utilisé sans intention d'effectuer de mesure, uniquement pour un nettoyage soigné car son efficacité est comparable ou supérieure à celle des dispositifs déjà connus.

Il est enfin possible d'ajouter des moyens constitués de façon à peser sur la coupe pour la plaquer contre la surface par exemple une cloche branchée à un circuit d'aspiration ou à tout autre dispositif de pompage. La cloche s'appuie sur la surface par une pièce élastique et déformable et entoure la coupe.

De tels dispositifs pneumatiques ou mécaniques permettent le maintien en place et l'étanchéité dans des positions variées. Une forte pression d'adhérence est ainsi obtenue, qui peut être maintenue aussi longtemps qu'on le souhaite. Sinon, on peut se contenter d'une poignée de manipulation pour plaquer à la main la coupe sur la surface.

L'invention est aussi relative à un procédé de mesure de la propreté d'une surface, consistant à plaquer une coupe possédant une ouverture de superficie déterminée sur la surface, l'ouverture étant plaquée sur la surface, caractérisé en ce qu'il consiste à introduire un fluide dans la coupe et à décoller et entraîner les salissures de la surface au moyen du fluide, aucun outil ni corps solide ne frottant sur la surface, à recueillir le fluide et à mesurer la teneur en impuretés dans le fluide. Le fluide est dépourvu d'impuretés susceptibles d'être confondues à la mesure avec les salissures prélevées quand il est introduit. Le décollement et l'entraînement des salissures sont assurés en produisant un champ de force astationnaire à l'intérieur de la coupe et sur toute la portion de la surface englobée par l'ouverture de la coupe.

On va maintenant décrire l'invention plus en détail à l'aide des figures suivantes annexées à titre illustratif et non limitatif et qui illustrent plusieurs réalisations de l'invention :
- la figure 1 est une vue d'ensemble d'une réalisation du dispositif,
- la figure 2 représente un aménagement possible du dispositif,
- la figure 3 et la figure 4 représentent deux vues partielles d'une deuxième réalisation,
- les figures 5 et 6 représentent deux réalisations de cloches de pressage de la coupe sur la surface,
- la figure 7 représente une troisième réalisation,
- les figures 8 à 10 représentent une quatrième réalisation,
- la figure 11 représente une cinquième réalisation,
- et les figures 12 et 13 représentent deux aménagements possibles de piston.

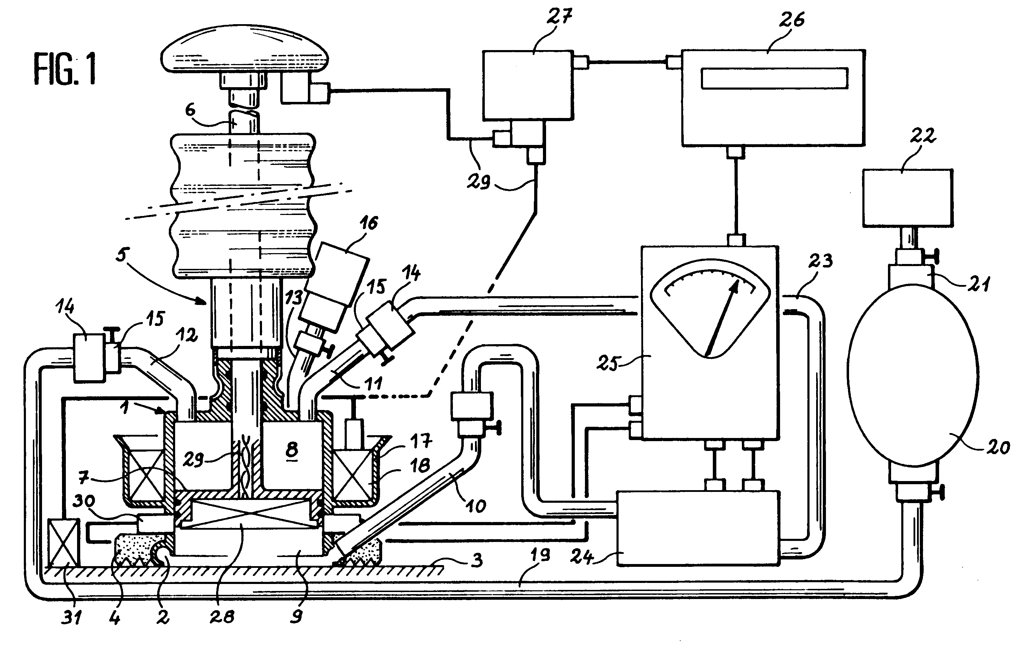

On se reporte tout d'abord à la figure 1, où on aperçoit une coupe 1 de forme cylindrique et qui est ouverte à une embouchure entourée par un bord 2 circulaire et plaqué sur une surface 3 dont il faut mesurer la propreté. Un joint d'étanchéité 4 à lèvres éventuellement multiples entoure le bord 2. Une poignée 5 se dresse à partir du fond, opposé au bord 2, de la coupe 1 ; elle est traversée par une tige 6 qui se prolonge dans la coupe 1 où elle se termine par un piston 7 qui y coulisse et sépare le volume enclos par la coupe 1 et la surface 3 en deux chambres séparées 8 et 9 dont la première est du côté du fond et la seconde du côté de la surface 3.

La forme de la coupe 1 peut être différente selon l'allure de la surface à traiter, la répartition des autres constituants de l'appareil, et les exigences pour un bon effet des ultrasons. Il est inutile qu'elle soit cylindrique en l'absence du piston 7, qui est omis dans d'autres réalisations.

La poignée 5 peut être empoignée par un opérateur pour presser la coupe 1 sur la surface 3. Elle peut aussi être accrochée à un porteur mobile télécommandé qui se déplace sur la surface 3 et qui comprend un mécanisme de pressage de la coupe. De tels véhicules sont répandus dans l'industrie nucléaire pour effectuer des mesures ou des traitements dans des sites contaminés. Le fluide de prélèvement est susceptible d'être contaminé dans de pareils cas, mais l'utilisation de circuits confinés de fluide et sur lesquels la mesure peut éventuellement être faite, comme on va le voir permet d'éviter toute effusion du fluide ainsi que des mesures périlleuses en laboratoire, où il faudrait travailler derrière des protections. Si un véhicule est utilisé, on préconise cependant de le maintenir immobile pendant l'utilisation de l'appareil de collecte, du moins quand les impuretés collectées devront être mesurées, car des mesures précises sont impossibles en pratique si l'appareil est déplacé, comme on le prévoit pour les dispositifs usuels actuels.

Suivant les modes d'utilisation, un ou plusieurs raccords constitués par des bouts de conduite rigides et solidaires de la coupe 1 peuvent si nécessaire déboucher à l'intérieur de celle-ci : dans l'exemple présenté, un premier raccord 10 débouche près du bord 2, un deuxième raccord 11 et un troisième 12 débouchent à travers le fond, de même qu'un raccordement de vidange 13. Les raccords 10 à 13 se terminent tous à l'extérieur par une douille de raccordement comme 14 sur laquelle peuvent être branchés des filtres comme 16, des robinets comme 15 ou tout autre dispositif de transfert ou d'étanchéité. On peut donc leur raccorder des tuyaux souples terminés par des douilles adaptées ou au contraire laisser les extrémités nues en fermant alors les robinets 15.

Une coupelle 17 est disposée autour de la paroi circonférentielle de la coupe 1. Elle reçoit des générateurs d'ultrasons 18 disposés en couronne autour de la coupe 1 pour faire vibrer le liquide qu'elle contient. Des générateurs de vibrations mécaniques a fréquences beaucoup plus basses peuvent aussi favorablement être envisagées, montés en périphérie de la coupe.

Ce dispositif se prête à de nombreuses configurations de fonctionnement. On a représenté un exemple où un premier tuyau souple 19 est installé sur le troisième raccord 12 ; il aboutit à une ampoule 20 de remplissage de liquide munie d'une ouverture supérieure 21 et qui débouche sur l'extérieur par un filtre 22. Il existe un second tuyau souple 23 dont les extrémités sont raccordées au premier et au deuxième raccords 10 et 11. Il porte un dispositif de mesure d'encrassement 24 qui est en fait une cellule de mesure d'une propriété du fluide qui circule à travers le second tuyau souple 23. L'appareil de mesure 24 est complété par un appareil de quantification (nombre, dimensions, granulométrie, ...) 25 qui indique le résultat de la mesure. On peut encore prévoir un appareil de commande 26 relié à l'appareil compteur et qui est apte à commander un amplificateur 27 relié aux générateurs d'ultrasons 18 externes ainsi qu'à d'autres générateurs d'ultrasons 28 situés à l'intérieur du piston 7 par des connexions électriques 29 dont certaines sont externes et d'autres s'étendent au coeur de la tige 6. Ces générateurs d'ultrasons 18 et 28 pourraient toutefois être complétés ou remplacés par des générateurs d'ultrasons 31 posés directement sur la surface 3, à côté de la coupe 1 et à l'extérieur de celle-ci. Il est souvent préférable de disposer les générateurs d'ultrasons 31 sur la surface opposée à la surface 3 et devant la coupe 1 quand la surface 3 appartient à une pièce mince. Le décollement des impuretés est souvent bien plus efficace ainsi, car les efforts superficiels introduits peuvent être importants. L'action des générateurs d'ultrasons 18, 28 ou 31 peut aussi être complétée par celles de percuteurs qui font vibrer la surface 3 ou de moyens électriques qui la portent à un potentiel électrique déterminé et provoquent alors des forces électrostatiques entre la surface 3 et la coupe 1, qui facilitent le décollement des impuretés. L'emploi de générateurs de courants de Foucault et en général de tout générateur de champ de forces mécaniques est aussi concevable. De tels appareils sont disposés comme les générateurs d'ultrasons 31 et sont commandés indépendamment du reste du dispositif. On a enfin figuré un second appareil de mesure 30 qui est situé autour de la paroi cylindrique de la coupe 1, entre le joint d'étanchéité 4 et les générateurs d'ultrasons 18. Il est apte à mesurer l'absorbance du liquide que la coupe 1 contient ou un autre paramètre caractérisant la pollution du liquide par les impuretés. Au moins à cet endroit, la coupe 1 est en matière transparente (verre, quartz, ...) pour permettre des mesures par voie optique.

Une mesure implique de remplir l'intérieur de la coupe 1. Le robinet 15 du troisième raccord 12 est ouvert dans une position où le piston 7 est abaissé et où la chambre supérieure 8 est donc en dépression. Le liquide dont l'ampoule 20 était pleine jusqu'alors coule dans la chambre supérieure 8 et chasse son contenu gazeux par le raccord de vidange 13 équipé du filtre 16. On ferme ensuite les robinets 15 du troisième raccord 12 et du raccord de vidange 13 et on ouvre ceux du premier et du deuxième raccords 10 et 11, puis on remonte le piston 7 en tirant sur la tige 6. Le liquide s'écoule dans la chambre inférieure 9 et dans le second tuyau souple 23. Un nouvel abaissement du piston 7 chasse le contenu gazeux de la chambre inférieure 9 dans la chambre supérieure 8. On ouvre alors à nouveau les robinets 15 du troisième raccord 12 et du raccord de vidange 13 après avoir fermé les autres, ce qui complète le remplissage de la coupe 1 en remplissant à nouveau la chambre supérieure 8. On peut si nécessaire recommencer plusieurs fois cette façon d'agir.

Après cela, les robinets 15 du troisième raccord 12 et du raccord de vidange 13 sont définitivement fermés et les autres ouverts. Le piston 7 est promené dans la coupe 1 pour agiter dans celle-ci et créer un courant à travers le second tuyau souple 23. Comme le premier raccord 10 débouche près du bord 2 et fait un angle aigu de faible valeur avec la surface 3, le courant rase la portion de surface 3 circonscrite par le bord 2, ce qui entraîne efficacement les salissures collées à la surface 3. Le liquide est donc peu à peu sali par les impuretés arrachées, ce qui peut être suivi par les appareils de mesure 24 lorsqu'il est monté en ligne, ou 30, si la mesure se fait directement dans la cuve, jusqu'à obtention des résultats recherchés. On peut effectuer des mesures continuelles sur le fluide jusqu'à la stabilisation de la teneur en impuretés mesurer au bout d'un temps déterminé, faire des prélèvements successifs avec des renouvellements du fluide et additionner les résultats des mesures, ou encore diviser le fluide pour faire des mesures différentes sur chaque portion. On peut aussi laisser croître les colonies bactériennes et faire des mesures dans la cuve en différé. Certaines de ces méthodes impliquent des prélèvements du fluide, qui est alors emmené pour être analysé par un appareil séparé du dispositif. Ces modes opératoires sont cependant déjà bien connus et ne seront donc pas évoqués davantage. Pendant toute la durée du prélèvement les générateurs d'ultrasons 18 et 28 ont été en marche pour faciliter le décollement des salissures.

Plusieurs variantes d'exécution du procédé sont possibles. C'est ainsi qu'il est possible de remplacer le tuyau souple 23 par un autre, avantageusement plus court, et qui est dépourvu de l'appareil de mesure 24. Seul l'appareil de mesure 30 est alors utilisé. Le liquide peut d'autre part être récupéré en branchant une ampoule de soutirage semblable à l'ampoule 20 sur le premier raccord 10. Il suffit d'abaisser le piston 7 pour que le liquide sali entre dans l'ampoule en question, qui peut alors être retirée pour amener le liquide prélevé à un appareil de mesure séparé du dispositif.

Il est même possible d'utiliser la même ampoule 20 pour le remplissage et le prélèvement. L'ampoule 20 est alors branchée sur le premier raccord 10 et les deuxième et troisième raccords 11 et 12 sont alors inutilisés et la chambre supérieure 8 reste vide. Le mouvement d'agitation du liquide consiste en un va-et-vient entre la chambre inférieure 9 et l'ampoule 20. Dans cette conception, l'appareil de mesure 24 peut être interposé entre la coupe 1 et l'ampoule 20. On constate donc que le piston peut remplir

ses diverses fonctions de bien des manières selon le montage adopté pour l'appareil.

Il pourrait cependant être remplacé par une pompe établie sur une boucle du circuit de fluide pour réaliser l'entraînement du fluide, le remplissage de la coupe 1 et le soutirage du fluide chargé des salissures prélevées.

Tout es ces variant es d'exécution du procédé peuvent être réalisées avec un dispositif tel que celui qui est décrit et qui présente des propriétés de modularité grâce auxquelles des éléments différents peuvent être branchés aux différents raccords 10 à 13.

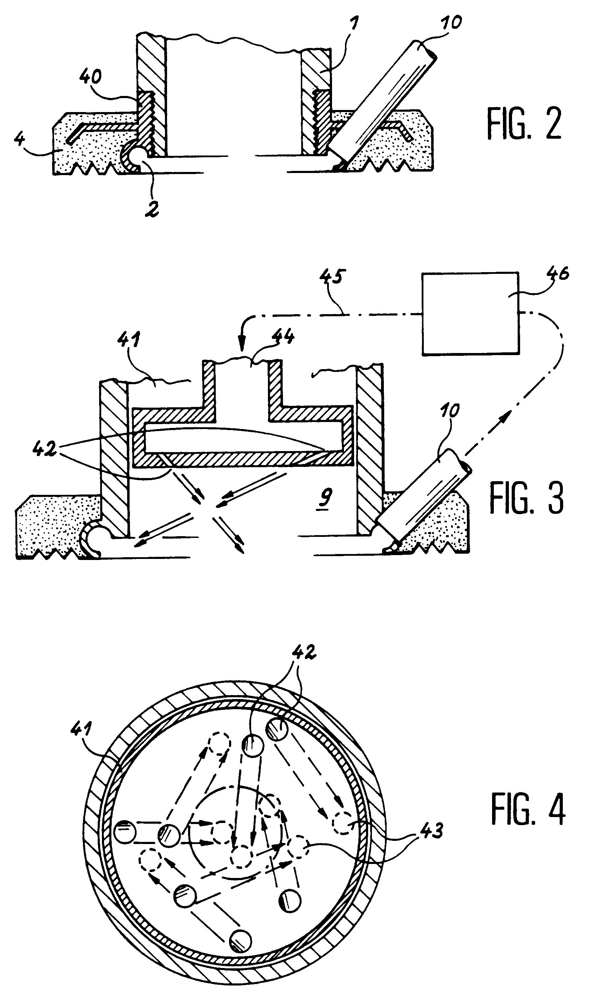

Un détail d'aménagement est représenté à la figure 2. Le bord 2 de la coupe peut être constitué par une bague amovible 40, filetée autour du reste de la coupe 1 et qui porte le premier raccord 10 et le joint d'étanchéité 4. Il est possible de démonter la bague 40 entre les mesures pour la ranger et la nettoyer commodément. Elle peut alors être remplacée par un bouchon non représenté fermant et protégeant la coupe 1. La bague 40 peut aussi être remplacée par d'autres en fonction de la forme ou de la courbure de chaque surface particulière sur laquelle la mesure doit être effectuée : comme éventuellement la coupe 1, elle a une forme adaptée aux caractéristiques géométriques de la surface 1.

Une autre réalisation est représentée aux figures 3 et 4. Le piston de la réalisation précédente est ici remplacé par un corps creux 41 rempli de liquide sous pression et dont la face inférieure est percée de buses inclinées 42. Comme on le voit bien sur la figure 4, les buses inclinées 42 sont situées plutôt sur le pour tour du corps creux 41 et leur orientation est telle que leurs surfaces d'impact 43 sur la surface 3 sont disposées sur des rayons différents tracés à partir du centre de la coupe 1 et à des distances différentes de ce centre, mais de manière que ces distances se chevauchent, de sorte que la rotation du corps creux 41 autour de sa tige 44 (qui est évidée et sert à l'alimentation en liquide sous pression) déplace les traces d'impact 43 sur l'ensemble de la portion de la surface 3 qui est enclose par la coupe 1 : aucune parcelle n'échappe au lavage par le liquide sous pression.

L'excédent de liquide dans la chambre inférieure 9 est aspiré par le premier raccord 10 et peut être renvoyé à la tige évidée 44 par un tuyau souple 45 de manière à former une boucle. Une pompe 46 est située sur le tuyau souple 45.

Cette réalisation peut évidemment comporter des raccordements supplémentaires pour le remplissage ou le soutirage de liquide, des appareils de mesure et des générateurs à ultrasons comme dans la réalisation précédente.

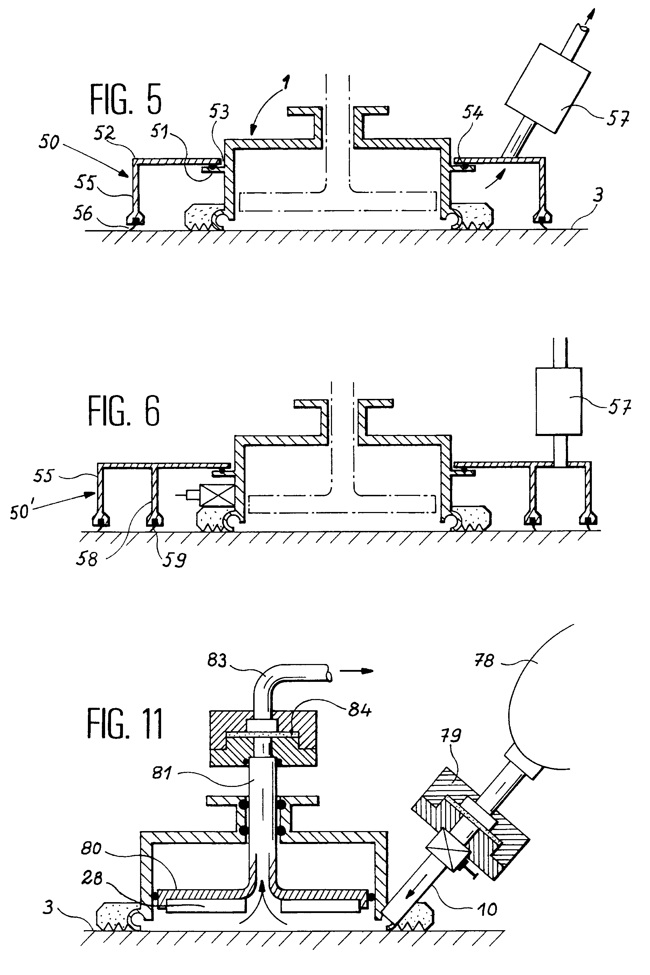

Un dispositif pour faire adhérer la coupe 1 à la surface 3 apparaît sur les figures 5 et 6. Il s'agit sur la figure 5 d'une cloche 50, c'est-à-dire d'une enveloppe disposée autour de la coupe 1 et qui s'appuie contre une collerette 51 située autour de la paroi extérieure de la coupe 1. La cloche 50 se compose plus précisément d'une paroi de dessus 52 plane, à évidement 53 central pour qu'on puisse glisser la cloche 50 autour de la coupe 1 et qui presse sur la collerette 51 par l'intermédiaire d'un joint d'étanchéité 54 circulaire. Elle se compose également d'une enveloppe extérieure 55 qui touche la surface 3 par un autre joint d'étanchéité 56 circulaire, élastique et assez souple. La poignée 5 utilisée pour presser la coupe 1 peut alors être omise ; les raccords et les autres éléments connexes à la coupe 1 sont bien sûr placés pour ne pas gêner l'introduction de la cloche 50.

Une pompe d'aspiration 57 est connectée à L'intérieur de la cloche 50. Il suffit de la mettre en marche pour que le vide s'établisse, que le joint 56 soit sensiblement écrasé et aplati et que la paroi de dessus 52 presse la coupe 1 contre la surface 3.

La figure 6 représente une variante d'exécution où la cloche 50' comprend une enveloppe interne ou doublure 58 entourée par l'enveloppe externe 55 et munie également d'un joint d'étanchéité élastique et souple 59. Le circuit de la pompe d'aspiration 57 débouche entre les deux enveloppes 55 et 58 et aspire L'air contenu dans ce volume. Le volume situé entre la doublure 58 et la coupe 1 peut contenir les générateurs d'ultrasons 18. Dans une telle réalisation, il est inutile de maintenir le joint d'étanchéité 54 entre la collerette 51 et la paroi de dessus 52.

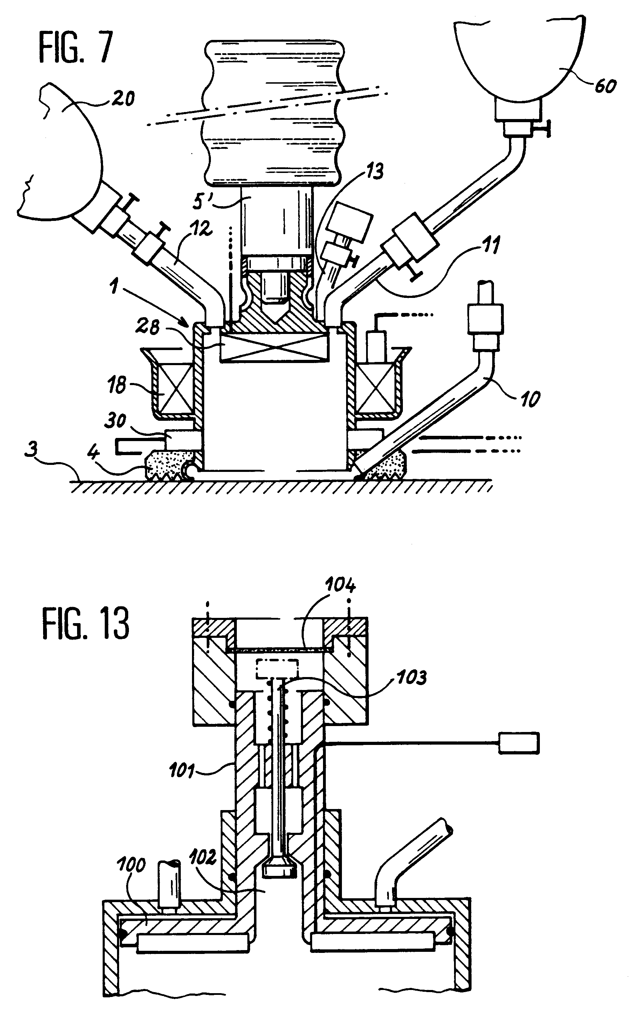

Une autre réalisation apparaît à la figure 7. On retrouve une coupe 1 munie entre autres des trois raccords 10 à 12 et du raccord de vidange 13. La différence consiste en ce que le piston est omis ; la poignée 5' est alors pleine. Le générateur d'ultrasons 28 solidaire du piston 7 dans la réalisation précédente est alors fixé au fond de la coupe 1.

Un moyen de décollement et éventuellement d'entraînement des impuretés peut être constitué par un moyen d'agitation du contenu de la coupe 1. Il peut consister en une ampoule de gaz 60 reliée au deuxième raccord 11. Une éruption continuelle de gaz fait bouillonner le liquide qui remplit la coupe 1, ce qui détache les impuretés. Le liquide chargé d'impuretés peut ensuite éventuellement être prélevé par une ampoule de soutirage branchée sur le premier raccord 10. Dans cette réalisation, il est évidemment essentiel que le raccord de vidange 13 soit ouvert. Le gaz de l'ampoule 60 est comprimé et en quantité suffisante pour une mesure complète. Cette méthode d'arrachement et d'entraînement des salissures n'est pas incompatible avec l'emploi de générateurs d'ultrasons tels que 28, qui au contraire la facilitent.

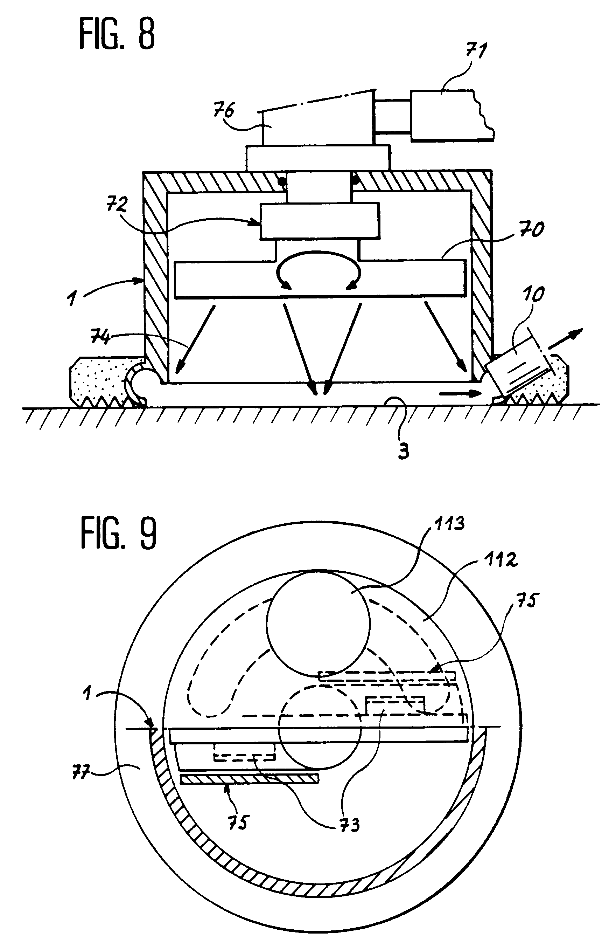

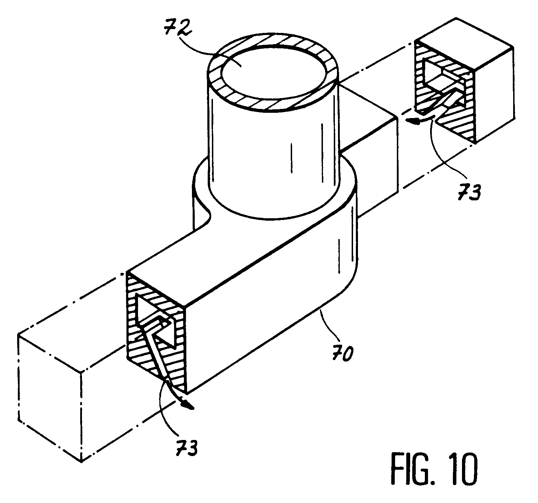

Il est d'ailleurs possible d'utiliser du gaz comme fluide de prélèvement pour certaines applications, et notamment quand la surface 3 est lisse et pas grasse. Dans une telle réalisation (figures 8 à 10), on remplace le corps creux en forme de piston par une pièce de forme un peu différente dont l'élément essentiel est une rampe 70 de distribution de gaz comprimé. La rampe 70 est reliée à un dispositif d'alimentation en gaz 71 par une tige évidée 72. La rampe est munie d'ouvertures inférieures 73 par laquelle s'échappent des jets de gaz 74 en direction de la surface 3, dont les salissures sont détachées et soulevées. La surface d'impact des jets de gaz 74 porte la référence 75 et s'étend sur une portion diamétrale étroite de la surface 3. Il convient donc, comme dans la réalisation à piston creux 41, de faire tourner la rampe 70 et la tige 72 pour que les jets de gaz 74 balaient toute la surface 3 enclose par le bord 2. On y parvient en inclinant les ouvertures inférieures 73 de manière à créer des couples de rotation sur la rampe 70 et la tige 72, qui tourne librement et qu'une butée 76 posée sur le fond de la coupe 1 soutient. Le gaz chargé d'impuretés passe ensuite dans le premier raccord 10 et aboutit à un appareil de mesure ou un filtre sur lequel les impuretés sont retenues avant d'être comptées. Il peut également être extrait par un circuit d'aspiration qui comporte une sortie 112 débouchant sur un filtre 113. La rotation de la rampe 70 peut être assurée par la poussée de réaction des jets de gaz 74.

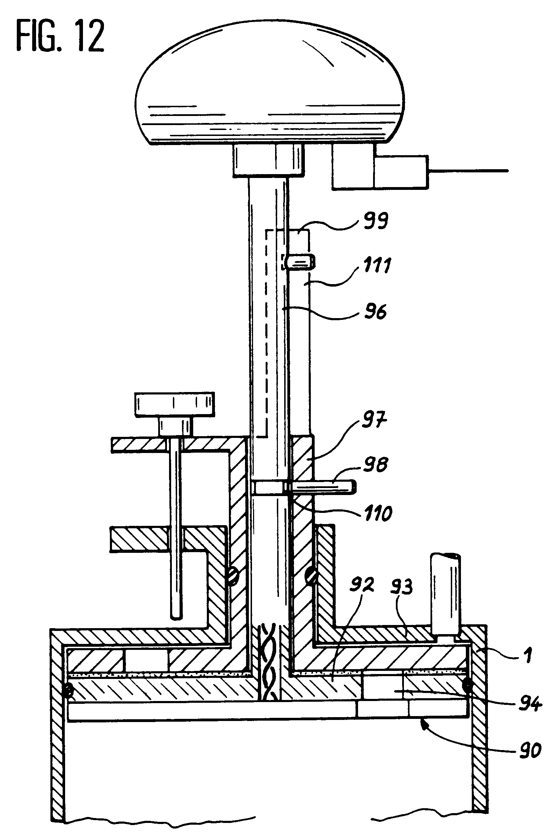

Dans la réalisation de la figure 11, on utilise encore du gaz comme fluide de prélèvement. Le circuit d'alimentation en gaz est branché au premier raccord 10 et consiste en un dispositif d'alimentation 78, tel qu'une ampoule ou une bouteille, muni d'un filtre 79. Du gaz propre est donc soufflé rasant sur la surface 3, et le piston est abaissé au voisinage de la surface 3. Dans cette réalisation, il porte la référence 80 et comporte une tige 81 évidée au coeur sur toute sa longueur qui aboutit à un circuit de vidange 83 muni d'un filtre 84 qui retient les impuretés. On peut donc le démonter ensuite pour le plonger dans la solution sur laquelle la mesure de propreté est menée, peser les impuretés ou effectuer une mesure adaptée au type d'impuretés collectées (radioactives, organiques, biologiques, ...). Le dispositif d'alimentation 78 peut être complété ou remplacé par une pompe aspirante montée en aval du filtre 84. L'avantage de la proximité du piston 80 de la surface 3 est que le flux de gaz est laminaire et énergique, et que les générateurs d'ultrasons 28 situés sous le piston 80 sont plus efficaces.

Une autre réalisation est celle de la figure 12. Elle a pour intérêt de simplifier le passage des liquides ou généralement des fluides entre les deux chambres 8 et 9 délimitées par un piston. Dans cette réalisation, le piston porte la référence 90 et est composé de deux disques superposés et séparés par une plaque de garniture étanche 91 : chacun des disques 92 et 93 porte des ouvertures, respectivement 94 et 95, qui peuvent être mises en prolongement en plaçant des disques 92 et 93 à une position angulaire déterminée. Le disque inférieur 92 est donc solidaire de la tige 96 alors que le disque supérieur 93 est solidaire d'un tube 97 qui entoure la tige 96. Deux goupilles 98 et 99 sont engagées à la fois dans la tige 96 et le tube 97 pour les maintenir solidaires en translation et en rotation respectivement. En effet, la goupille 98 est engagée à travers une entaille circonférentielle 110 de la tige 96 et l'autre goupille 99 est engagée à travers une entaille longitudinale 111 du tube 97. Si on enlève cette dernière goupille 99, la rotation des disques 92 et 93 devient possible pour faire communiquer les chambres 8 et 9 à travers le piston 90 et les remplir plus facilement de liquide tout en facilitant la vidange des gaz. Au cours d'un mode de fonctionnement, où le piston 90 sert d'agitateur, on décale les ouvertures 94 et 95 pour que le piston 90 redevienne une barrière infranchissable.

On termine la description sur la figure 13. Le piston 100 est, de manière analogue à la figure 11, muni d'une tige 101 dont le coeur est évidé par un perçage 102. Le perçage 102 est toutefois occupé par une clapet 103. Cette réalisation est plus précisément destinée à un système où le fluide de mesure est un liquide et où du gaz est ajouté pour faire bouillonner. Les deux fluides sont introduits tour à tour par le premier raccord 10. Quand le gaz est donné, le clapet 103 est ouvert par l'action d'un dispositif courant tel qu'un solénoïde. Un filtre 104 est prévu au sommet de la tige 101.

Le liquide utilisé peut être selon le cas de l'eau distillée ou un autre solvant. Le gaz peut être de l'air. Dans tous les cas, il est indispensable que le fluide soit très propre pour obtenir des mesures correctes.

La forme et les dimensions de la coupe 1, de même que les dimensions, la disposition et l'orientation des orifices de soufflage et d'entraînement doivent être choisis pour enlever effectivement de la coupe les impuretés collectées, ce qui implique de ne pas laisser de poches de fluide stagnant. Les moyens de décollement doivent aussi être aptes à détacher complètement, ou du moins uniformément, les impuretés sur toute la portion de la surface 3 qui est englobée par la coupe 1.

## Revendications

1. Dispositif de collecte d'impuretés d'une surface (3) comprenant une coupe (1) à bord (2) plaqué contre la surface, comprenant un circuit de fluide de collecte englobant la coupe (1) et des moyens de confinement du circuit, de décollement des impuretés de la surface par le fluide et d'entraînement des impuretés par le fluide, caractérisé en ce que le circuit comprend une branche sur laquelle un récipient amovible (20) de fluide ou un instrument de mesure de propreté (24) est installé, les moyens de décollement étant agencés pour créer un champ de force astationnaire dans la coupe et sur toute la portion de surface englobée par le bord de la coupe.

2. Dispositif selon la revendication 1, caractérisé en ce que la coupe contient un piston (7) coulissant dans la coupe et la partageant en deux chambres (8, 9) communicantes.

3. Dispositif selon la revendication 1, caractérisé en ce que les moyens de décollement comprennent des générateurs d'ultrasons (18, 28, 31).

4. Dispositif selon la revendication 3, caractérisé en ce que certains au moins des générateurs d'ultrasons (28) occupent sensiblement toute la surface du piston, la coupe étant cylindrique.

5. Dispositif selon la revendication 3, caractérisé en ce que certains au moins des générateurs d'ultrasons (31) sont posés sur la surface à côté de la coupe (1).

6. Dispositif selon la revendication 1, caractérisé en ce que les moyens de décollement comprennent des générateurs de vibrations mécaniques disposés sur la coupe.

7. Dispositif selon la revendication 1, caractérisé en ce que les moyens de décollement comprennent une partie du circuit confiné composée de buses (42, 73) de projection du fluide vers la surface et qui débouchent dans la coupe.

8. Dispositif selon la revendication 7, caractérisé en ce que les buses sont situées sur un corps creux (41, 70) situé dans la coupe.

9. Dispositif selon la revendication 8, caractérisé en ce que les buses sont réparties de façon à asperger des portions (43) de la surface qui s'étendent sur des portions de plusieurs rayons de la surface, le bord de la coupe et le corps creux étant circulaires, lesdites portions ayant une extension radiale totale d'un rayon entier de la surface.

10. Dispositif selon la revendication 9, caractérisé en ce que les buses sont orientées obliquement de sorte que la projection du fluide fasse tourner le corps creux (70) autour d'un axe (6)

11. Dispositif selon la revendication 9, caractérisé en ce que les buses en forme de fentes sont disposées sur le corps creux (70) de manière à couvrir l'ensemble de la surface.

12. Dispositif selon la revendication 1, caractérisé en ce qu'un raccordement (10) débouche dans la coupe devant la surface et en formant un angle aigu avec la surface.

13. Dispositif selon la revendication 12, caractérisé en ce qu'il comprend un second raccordement (11, 12) débouchant sur une partie de fond de la coupe, opposée à la surface.

14. Dispositif selon l'une quelconque des revendications 1 à 13, dans lequel le fluide est liquide, caractérisé en ce que les moyens de décollement comprennent un moyen de soufflage de gaz (60, 71) dans la coupe.

15. Dispositif selon la revendication 1, caractérisé en ce que la coupe comprend des moyens de vidange de gaz (13).

16. Dispositif selon la revendication 2, caractérisé en ce que les moyens de vidange comprennent des ouvertures (94, 95, 102) à travers le piston.

17. Dispositif selon la revendication 1, caractérisé en ce que la coupe (1) est au moins partiellement en matière transparente.

18. Dispositif selon la revendication 1, caractérisé en ce que la coupe comporte une partie de bord amovible (40) portant un joint d'étanchéité (4).

19. Dispositif selon la revendication 1, caractérisé en ce que la coupe (1) ou la partie amovible (40) ont une forme adaptée aux caractéristiques géométriques des surfaces à traiter.

20. Dispositif selon la revendication 1, caractérisé en ce qu'il comprend une cloche (50, 50') branchée à un circuit d'aspiration (57) et constituée de façon à peser sur la coupe pour la plaquer contre la surface, la cloche s'appuyant sur la surface par une pièce élastique et déformable (56) et entourant la coupe.

21. Procédé de mesure de la propreté d'une surface, consistant à plaquer une coupe possédant une ouverture de superficie déterminée sur la surface, l'ouverture étant plaquée sur la surface, caractérisé en ce qu'il consiste à introduire un fluide dans la coupe et à décoller et entraîner les salissures de la surface au moyen du fluide, aucun outil ni corps solide ne frottant sur la surface, à recueillir le fluide et à mesurer la teneur en impuretés dans le fluide, le fluide étant, quand il est introduit, dépourvu d'impuretés susceptibles d'être confondues à la mesure avec les salissures prélevées, le décollement et l'entraînement des salissures étant assurés en produisant un champ de force astationnaire à l'intérieur de la coupe et sur toute la portion de la surface englobée par l'ouverture de la coupe.

## Claims

1. Device for collecting impurities from a surface (3), comprising a cup (1) having an edge (2) pressed against the surface and comprising a collecting-fluid circuit encompassing the cup (1) and means of confinement of the circuit, means of detachment of the surface impurities by the fluid and means of entrainment of the impurities by the fluid, characterized in that the circuit comprises a branch on which a removable fluid container (20) or a cleanliness-measuring instrument (24) is fitted, the means of detachment being designed to create a non-stationary force field in the cup and over the entire surface portion encompassed by the edge of the cup.

2. Device according to Claim 1, characterized in that the cup contains a piston (7) which slides in the cup and divides it into two communicating chambers (8, 9).

3. Device according to Claim 1, characterized in that the means of detachment comprise ultrasonic generators (18, 28, 31).

4. Device according to Claim 3, characterized in that at least some of the ultrasonic generators (28) occupy substantially the entire surface area of the piston, the cup being cylindrical.

5. Device according to Claim 3, characterized in that at least some of the ultrasonic generators (31) are placed on the surface alongside the cup (1).

6. Device according to Claim 1, characterized in that the means of detachment comprise mechanical vibration generators placed on the cup.

7. Device according to Claim 1, characterized in that the means of detachment comprise a part of the confined circuit, this part being composed of nozzles (42, 73) for spraying the fluid towards the surface and which emerge in the cup.

8. Device according to Claim 7, characterized in that the nozzles are located on a hollow body (41, 70) located in the cup.

9. Device according to Claim 8, characterized in that the nozzles are distributed so as to spray portions (43) of the surface which extend over portions of several radii of the surface, the edge of the cup and the hollow body being circular, the said portions having a total radial extension of one entire radius of the surface.

10. Device according to Claim 9, characterized in that the nozzles are oriented obliquely so that the spraying of the fluid makes the hollow body (70) rotate about a spindle (6).

11. Device according to Claim 9, characterized in that the slot-shaped nozzles are arranged on the hollow body (70) so as to cover the entire surface.

12. Device according to Claim 1, characterized in that a fitting (10) emerges in the cup in front of the surface and makes an acute angle with the surface.

13. Device according to Claim 12, characterized in that it comprises a second fitting (11, 12) emerging on a part of the bottom of the cup, opposite the surface.

14. Device according to any one of Claims 1 to 13, in which the fluid is liquid, characterized in that the means of detachment comprise a means (60, 71) for blowing gas into the cup.

15. Device according to Claim 1, characterized in that the cup comprises means (13) for venting the gas.

16. Device according to Claim 2, characterized in that the venting means comprise openings (94, 95, 102) through the piston.

17. Device according to Claim 1, characterized in that the cup (1) is at least partly made of a transparent material.

18. Device according to Claim 1, characterized in that the cup includes a removable edge part (40) bearing a seal (4).

19. Device according to Claim 1, characterized in that the cup (1) or the removable part (40) has a shape which matches the geometrical characteristics of the surfaces to be treated.

20. Device according to Claim 1, characterized in that it comprises a bell (50, 50') connected to a suction circuit (57) and constructed so as to bear on the cup in order to press it against the surface, the bell bearing on the surface via an elastic and deformable piece (56) and surrounding the cup.

21. Method of measuring the cleanliness of a surface, consisting in pressing a cup, having an opening of defined area, onto the surface, the opening being pressed onto the surface, characterized in that it consists in injecting a fluid into the cup and in detaching and entraining the dirt from the surface by means of the fluid, no tool or solid body rubbing against the surface, in collecting the fluid and in measuring the impurity content of the fluid, the fluid, when it is injected, being free from impurities likely to cause confusion in the measurement with the dirt that has been removed, the dirt being detached and entrained by producing a non-stationary force field inside the cup and over the entire portion of the surface encompassed by the opening of the cup.

## Patentansprüche

1. Vorrichtung zur Aufnahme von Schmutz von einer Oberfläche (3), ein Gehäuse (1) mit einem gegen die Oberfläche pressenden Rand (2) und ein das Gehäuse (1) einschließendes Aufnahmefluid-Leitungssystem umfassend und Einrichtungen zur Einschließung des Leitungssystems, zur Ablösung des Oberflächenschmutzes durch das Fluid und zur Mitnahme des Schmutzes durch das Fluid,
**dadurch gekennzeichnet,**
daß das Leitungssystem einen Zweig umfaßt, in dem ein herausnehmbarer Behälter (20) oder ein Reinheitsmeßgerät (24) installiert ist, wobei die Ablösungseinrichtungen so angeordnet sind, daß sie in dem Gehäuse und auf dem gesamten durch den Rand des Gehäuses eingeschlossenen Oberflächenteil ein astationäres bzw. nichtsationäres Kraftfeld erzeugen.

2. Vorrichtung nach Anspruch 1, dadurch gekennzeichnet, daß das Gehäuse einen Kolben (7) enthält, der in dem Gehäuse gleitet und es unterteilt in zwei kommunizierende Kammern (8, 9).

3. Vorrichtung nach Anspruch 1, dadurch gekennzeichnet, das die Ablösungseinrichtungen Ultraschallgeneratoren (18, 28, 31) umfassen.

4. Vorrichtung nach Anspruch 3, dadurch gekennzeichnet, daß wenigstens einige der Ultraschallgeneratoren (28) im wesentlichen die gesamte Kolbenoberfläche bedecken, wobei das Gehäuse zylindrisch ist.

5. Vorrichtung nach Anspruch 3, dadurch gekennzeichnet, daß wenigstens einige der Ultraschallgeneratoren (31) auf der Oberfläche stehen, seitlich von dem Gehäuse (1).

6. Vorrichtung nach Anspruch 1, dadurch gekennzeichnet, daß die Ablösungseinrichtungen mechanische Vibrationsgeneratoren umfassen, angeordnet auf dem Gehäuse.

7. Vorrichtung nach Anspruch 1, dadurch gekennzeichnet, daß die Ablösungseinrichtungen einen Teil des eingeschlossenen Leitungssystems umfassen, gebildet durch Düsen (42, 73), die in dem Gehäuse mündend, um Fluid auf die Oberfläche zu spritzen.

8. Vorrichtung nach Anspruch 7, dadurch gekennzeichnet, daß die Düsen in einem Hohlkörper (41, 70) ausgebildet sind, der sich in dem Gehäuse befindet.

9. Vorrichtung nach Anspruch 8, dadurch gekennzeichnet, daß die Düsen so verteilt sind, daß sie Teile (43) der Oberfläche bespritzen, die sich über Teile von mehreren Radien bwz. Bereichen der Oberfläche erstrecken, wobei der Rand des Gehäuses und der Hohlkörper kreisförmig sind und besagte Teile eine radiale Gesamtausdehnung eines ganzen Radius bzw. Bereichs der Oberfläche haben.

10. Vorrichtung nach Anspruch 9, dadurch gekennzeichnet, daß die Düsen schräg ausgerichtet sind, so daß das Ausstoßen des Fluids den Hohlkörper (70) in Drehung um eine Achse (6) versetzt.

11. Vorrichtung nach Anspruch 9, dadurch gekennzeichnet, daß schlitzförmige Düsen auf dem Hohlkörper (70) so angeordnet sind, daß sie die gesamte Oberläche abdecken.

12. Vorrichtung nach Anspruch 1, dadurch gekennzeichnet, daß ein Anschluß bzw. Stutzen (10) in dem Gehäuse vor der Oberfläche mündet und mit dieser Oberfläche einen spitzen Winkel bildet.

13. Vorrichtung nach Anspruch 12, dadurch gekennzeichnet, daß sie einen zweiten Anschluß bzw. Stutzen (11, 12) umfaßt, in einem der Oberfläche entgegengesetzten hinteren Teil des Gehäuses mündend.

14. Vorrichtung nach einem der Ansprüche 1 bis 13, bei der das Fluid eine Flüssigkeit ist, dadurch gekennzeichnet, daß die Ablösungseinrichtungen eine Einrichtung (60, 71) zum Einblasen von Gas in das Gehäuse umfaßt.

15. Vorrichtung nach Anspruch 1, dadurch gekennzeichnet, daß das Gehäuse Gasentleerungseinrichtungen (13) umfaßt.

16. Vorrichtung nach Anspruch 2, dadurch gekennzeichnet, daß die Entleerungseinrichtungen den Kolben durchquerende Öffnungen (94, 95, 102) umfassen.

17. Vorrichtung nach Anspruch 1, dadurch gekennzeichnet, daß das Gehäuse (1) wenigstens teilweise aus transparentem Material ist.

18. Vorrichtung nach Anspruch 1, dadurch gekennzeichnet, daß das Gehäuse ein abnehmbares Randteil (40) umfaßt, das eine Dichtung (4) trägt.

19. Vorrichtung nach Anspruch 1, dadurch gekennzeichnet, daß das Gehäuse (1) oder das abnehmbare Teil (40) eine Form aufweisen, die an die geometrischen Charakteristika der Oberfläche angepaßt ist.

20. Vorrichtung nach Anspruch 1, dadurch gekennzeichnet, daß sie eine Glocke (50, 50') umfaßt, angeschlossen an eine Absaugleitung (57) und so ausgebildet, daß sie auf dem Gehäuse lastet, um es gegen die Oberfläche zu drücken, wobei sich die Glocke auf der Oberfläche durch ein elastisches und verformbares und das Gehäuse umgebendes Teil (56) abstützt.

21. Verfahren zum Messen der Oberflächenreinheit, darin bestehend, ein Gehäuse mit einer Öffnung, die eine bestimmte Fläche aufweist, auf die Oberfläche zu pressen, wobei die Öffnung auf die Oberfläche gepreßt wird,
**dadurch gekennzeichnet,**
daß es darin besteht, ein Fluid in das Gehäuse einzuleiten und den Oberflächenschmutz mit Hilfe des Fluids abzulösen und abzuführen ohne Reiben eines Werkzeugs oder Festkörpers auf der Oberfläche, das Fluid zu sammeln und den Schmutzgehalt dieses Fluid zu messen, wobei das Fluid, wenn es eingeleitet wird, keine Verunreinigungen enthält, die beim Messen mit dem abgelösten Schmutz verwechselt werden könnten, und die Ablösung und Mitnahme des Schmutzes sichergestellt wird durch das Erzeugen eines nichtstationären Kraftfeldes im Innern des Gehäuses und auf dem gesamten von der Öffnung des Gehäuses eingeschlossenen Teil der Oberfläche.
